# EUROPÄISCHE PATENTSCHRIFT

(11) **EP 0 715 952 B1**
(45) Veröffentlichungstag und Bekanntmachung des Hinweises auf die Patenterteilung: **18.02.2004**
(21) Anmeldenummer: 95118608.9
(22) Anmeldetag: 27.11.1995
(51) Int. Cl.: B32B 27/32, C08L 23/16

(54) **Mehrschichtige, gereckte, heisssiegelbare Polypropylenfolie**
Multilayered, stretched, heatsealable polypropylene film
Feuille multicouche thermoscellable, étirée

(30) Priorität: 07.12.1994 DE 4443458
(43) Veröffentlichungstag der Anmeldung: 12.06.1996
(73) Patentinhaber: WOLFF WALSRODE AG, 29655 Walsrode (DE)
(72) Erfinder: Brandt, Rainer, Dr., D-29664 Walsrode (DE); Reiners, Ulrich, Dr., D-29643 Neuenkirchen (DE)
(74) Vertreter: Feldhues, Michael L.F., Dr.

(56) Entgegenhaltungen:
- DE-A- 4 128 820
- US-A- 4 487 871

## Beschreibung

Die Erfindung betrifft eine im Vakuum bedampfbare mehrschichtige, gereckte, heißsiegelbare, Polypropylenfolie mit guter Sperrwirkung gegen Wasserdampf, Sauerstoff und Aromen. Die, die Erfindung betreffende Folie weist als kennzeichnende Merkmale eine Kernschicht aus isotaktischem Polypropylen, zwei Zwischenschichten aus isotaktischem Polypropylen, eine coronavorbehandelte Außenschicht aus einem Blend zwischen einem Propylen/Ethylencopolymer und einem Ethylen/octencopolymer und einer siegelfähigen Schicht aus einem olefinischen Co- od. Terpolymer auf.

Mit Metallen oder Metalloxiden bedampfte Polypropylenfolien werden wegen ihrer guten Sperreigenschaften gegen Wasserdampf, Sauerstoff, Licht und Aromen meist zur Verpackung von empfindlichen Lebensmittel eingesetzt. Allerdings spielt neben diesen funktionellen Eigenschaften die Optik der Folie ein sehr große Rolle. Außerdem muß die Folie ohne Probleme auch auf schnellaufenden Verpackungsmaschinen zu verarbeiten sein.

So ist in der EP-A 329 336 eine metallisierbare Folie beschrieben die gute Barrieeigenschaften hat, allerdings ist aufgrund des hohen Homopolymeranteils in der zu metallisierenden Schicht die Haftung der aufgedampften Schicht für die heutigen Anforderungen nicht ausreichend.

In der EP-A 395 204 wird eine metallisierbare Folie beschrieben die eine verbesserte Metalladhesion hat, aufgrund des in der Anmeldung verwendeten Coextrusionsverfahrens hat die metallisierte Folie Nachteile bezüglich der Optik.

In der EP-A 562 496 wird eine Folie mit einem Ethylen/Octen-copolymer in der oder den Außenschicht(en) beschrieben, diese Folie ist allerdings aufgrund ihrer Schrumpfeigenschaft nicht für die Bedampfung im Vakuum geeignet.

Daher erwies es sich als notwendig, eine metallisierbare BOPP-Folie zu fertigen, die verbesserte Barriereeigenschaften gegen Wasserdampf und Sauerstoff, einen niedrigen Reibungskoeffizienten und eine brillante Optik besitzt.

Gelöst wird diese Aufgabe durch eine Folie gemäß Patentanspruch 1. Das bevorzugte Merkmal besteht darin, daß die fünfschichtige Folie eine im Vakuum bedampfbare Schicht aus einem Blend zwischen einem Propylen/Ethylencopolymer und einem Ethylen/Octencopolymer (d < 0,915 g/cm³) enthält, die beiden Zwischenschichten ein Propylenhomopolymer mit einem Melt Flow Index (MFI) zwischen 2 und 12 g/10min bevorzugt zwischen 5 und 11 g/10 min enthalten, die Kernschicht ein isotaktisches Polypropylen mit einem MFI zwischen 0.5 und 4.5 g/10min enthält und die siegelfähige Außenschicht ein olefinisches Homo-, Co- oder Terpolymer enthält.

Um eine gute Maschinengängigkeit von biaxial orientierten Polypropylenfolien zu gewährleisten, ist es notwendig, mindestens die Siegel- bzw. Deckschichten mit Additiven auszustatten. Allerdings weisen im Vakuum bedampfte Folien, wenn sie mit Gleitmittel wie Erucasäureamid oder Polydimethylsiloxan ausgestattet sind, eine schlechte Haftung der aufgedampften Schicht gegenüber der Basisfolie auf. Um die Folie trotz fehlender Gleitmittel maschinengängig zu machen ist es notwendig die Außenschichten mit ausreichend vielen Abstandshalterteilchen auszustatten. Gängige Abstandshalter sind Teilchen mit einem mittleren Durchmesser zwischen 1 und 5 µm aus Siliciumdioxid, Magnesiumsilikaten, Natriumaluminiumsilkaten, Kaliumaluminiumsilikaten (anorganische Abstandshalter) oder aus vernetztem Polymethylmetacrylat, Polyethylen oder Polyamid (organische Abstandshalter).

Unter den zahlreichen, für siegelfähige und im Vakuum bedampfbare Schichten eingesetzten Materialien, werden folgende bevorzugt eingesetzt:
- statistische Propylen/Ethylen-Copolymere
- statistische Propylen/Olefin (1)-Copolymere
- statistische Propylen/Ethylen/Olefin-Terpolymere
- Mischungen aus zwei oder drei der vorstehenden Polymere.

Besonders bevorzugt wird ein Blend aus einem Propylen/Ethylen-Copolymer (90-99%) dadurch gekennzeichnet, daß es 1,0-10% Polyethylen enthält und zwischen 110°C und 150°C, bevorzugt zwischen 120°C und 140°C schmilzt, und einem Ethylen/octencopolymer (1-10%), welches dadurch gekennzeichnet ist, daß es eine Dichte < 0.915 g/cm³ hat.

Die erfindungsgemäßen Folien können nach den üblichen Verfahren wie Laminierung, Beschichtung oder Schmelzcoextrusion hergestellt werden. Nach der Extrusion und der Verfestigung des Dickfilms auf der Gießwalze wird der Film in Laufrichtung (längs) mit einem Verstreckungsquotienten von 4/1 bis 7/1 bei einer Temperatur von 120°C - 150°C gereckt. Das Reckverhältnis in Querrichtung liegt vorzugsweise zwischen 8/1 und 12/1 und das Querrecken des Filmes wird bei einer Temperatur zwischen 130°C und 170°C vorgenommen. Die nachfolgende Thermofixierung wird vorzugsweise bei 1°C - 40°C unter der Querrecktemperatur durchgeführt. Um die Affinität der weitgehend unpolaren Folienoberfläche zu den Druckfarben zu gewährleisten, ist es nötig, die Folie einer Corona-(Sprüh) Vorbehandlung zu unterziehen. Dabei wird der Luftsauerstoff in Form von Carbonyl-, Epoxid-, Ether- oder Alkoholgruppen auf der Folienoberfläche eingelagert. Weitere Methoden der Vorbehandlung von Polypropylenfolien sind die Flamm-, Plasma-Fluorvorbehandlung und die Vorbehandlung mit Excimerlampen im UV-Bereich.

### Beispiel 1

Mittels des oben beschriebenen Herstellverfahrens wurde eine biaxial orientierte Folie (Flächenreckverhältnis: 45/1; Längsrecktemperatur: 142°C; Querrecktemperatur: 160°C) hergestellt, die folgenden Aufbau aufwies:
Gesamtdicke: 20 µm Schichtenfolge: ABCBD

### Deckschicht für die Bedampfung im Vakuum (A):

| | |
|---|---|
| Dicke | 1 µm |
| Material | 94,75 % Propylen/Ethylencopolymer mit 3,5% Ethylenanteil, MFI: 5,0 g/10 min. 5,0% Ethylen/Octencopolymer; Dichte:0,912 g/cm³ 0,25% SiO₂, mittlere Teilchengröße: 2,5 µm |

### Zwischenschichten (B):

| | |
|---|---|
| Dicke | 1 µm |
| Material | 100% isotaktisches Polypropylen; MFI:3.3 g/10 min |

### Kernschicht (C):

| | |
|---|---|
| Dicke | 16 µm |
| Material | 100% isotaktisches Polypropylen; MFI:9.0 g/10 min |

### Siegelschicht (D):

| | |
|---|---|
| Dicke | 1 µm |
| Material | 99,75 % Propylen/Ethylencopolymer mit 3,5% Ethylenanteil, MFI: 5,0 g/10 min. 0.25% SiO₂; mittlere Teilchengröße: 2,5 µm |

### Vergleichsbeispiel 1

Mittels des oben beschriebenen Herstellverfahrens wurde eine biaxial orientierte Folie (Flächenreckverhältnis: 45/1; Längsrecktemperatur: 142°C; Querrecktemperatur: 160°C) hergestellt, die folgenden Aufbau aufwies:
Gesamtdicke: 20 µm Schichtenfolge: ACD

### Deckschicht für die Bedampfung im Vakuum (A):

| | |
|---|---|
| Dicke | 1 µm |
| Material | 94,75 % Propylen/Ethylencopolymer mit 3,5% Ethylenanteil, MFI: 5,0 g/10 min. 5,0% Ethylen/Octencopolymer; Dichte: 0,912 g/cm³ 0,25% SiO₂, mittlere Teilchengröße: 2,5 µm |

### Kernschicht (C):

| | |
|---|---|
| Dicke | 18 µm |
| Material | 100% isotaktisches Polypropylen; MFI:9.0 g/10 min |

### Siegelschicht (D):

| | |
|---|---|
| Dicke | 1 µm |
| Material | 99,75 % Propylen/Ethylencopolymer mit 3,5% Ethylenanteil, MFI: 5,0 g/10 min. 0.25% SiO₂; mittlere Teilchengröße: 2,5 µm |

### Vergleichsbeispiel 2

Mittels des oben beschriebenen Herstellverfahrens wurde eine biaxial orientierte Folie (Flächenreckverhältnis: 45/1; Längsrecktemperatur: 142°C; Querrechrtemperatur: 160°C) hergestellt, die folgenden Aufbau aufwies:
Gesamtdicke: 20 µm Schichtenfolge: ABCBD

### Deckschicht für die Bedampfung im Vakuum (A):

| | |
|---|---|
| Dicke | 1 µm |
| Material | 99,75 % Propylen/Ethylencopolymer mit 3,5% Ethylenanteil, MFI: 5,0 g/10 min. 0,25% SiO₂, mittlere Teilchengröße: 2,5 µm |

### Zwischenschichten (B):

| | |
|---|---|
| Dicke | 1 µm |
| Material | 100% isotaktisches Polypropylen; MFI:3.3 g/10 min |

### Kernschicht (C):

| | |
|---|---|
| Dicke | 16 µm |
| Material | 100% isotaktisches Polypropylen; MFI:9.0 g/10 min |

### Siegelschicht (D):

| | |
|---|---|
| Dicke | 1 µm |
| Material | 99,75 % Propylen/Ethylencopolymer mit 3,5% Ethylenanteil, MFI: 5,0 g/10 min. 0.25% SiO₂; mittlere Teilchengröße: 2,5 µm |

### Vergleichsbeispiel 3

Mittels des oben beschriebenen Herstellverfahrens wurde eine biaxial orientierte Folie (Flächenreckverhältnis: 45/1; Längsrecktemperatur: 142°C; Querrecktemperatur: 160°C) hergestellt, die folgenden Aufbau aufwies:
Gesamtdicke: 20 µm Schichtenfolge: ACD

### Deckschicht für die Bedampfung im Vakuum (A):

| | |
|---|---|
| Dicke | 1 µm |
| Material | 99,75 % Propylen/Ethylencopolymer mit 3,5% Ethylenanteil, MFI: 5,0 g/10 min. 0,25% SiO₂, mittlere Teilchengröße: 2,5 µm |

### Kernschicht (C):

| | |
|---|---|
| Dicke | 18 µm |
| Material | 100% isotaktisches Polypropylen; MFI:9.0 g/10 min |

### Siegelschicht (D):

| | |
|---|---|
| Dicke | 1 µm |
| Material | 99,75 % Propylen/Ethylencopolymer mit 3,5% Ethylenanteil, MFI: 5,0 g/10 min. 0.25% SiO₂; mittlere Teilchengröße: 2,5 µm |

Die in dem Beispiel und den Vergleichsbeispielen beschriebenen Folien wurden im Vakuum mit Aluminium bis zu einer optischen Dichte von 2.0 bedampft.

Folgende Tabelle zeigt, daß die erfindungsgemäße Folie den Folien ohne Ethylen/Octencopolymer und den dreischichtigen Folien erheblich überlegen ist.

| | Wddu / g/m²d | O₂-Du / cm³/m²d bar | Beurteilung der Optik |
|---|---|---|---|
| Beispiel 1 | 0,15 | 46 | ++ |
| Vergleich 1 | 0,21 | 62 | - |
| Vergleich 2 | 0,45 | 378 | ++ |
| Vergleich 3 | 0,39 | 384 | - |

### Meßverfahren

### Bestimmung der Wasserdampfdurchlässigkeit (Wddu):

Die Wasserdampfdurchlässigkeit wurde gemäß DIN 53122, Teil 2, bei 23°C und 85% relative Luftfeuchtedifferenz bestimmt.

### Bestimmung der Sauerstoffdurchlässigkeit (O₂-Du):

Die Sauerstoffdurchlässigkeit wurde gemäß DIN 53380, Teil 3, bei 23°C und 0% relative Luftfeuchte bestimmt.

### Optik der metallisierten Muster

Die metallisierten Muster wurden völlig plan auf einer Glasplatte befestigt und dann bezüglich ihrer Fähigkeit Gegenstände verzerrungsfrei zu spiegeln beurteilt:
++ : Der Gegenstand wird orginalgetreu gespiegelt
+ : Das Spiegelbild zeigt eine leichte Unschärfe
- : Das Spiegelbild zeigt eine starke Unschärfe
-- : Der Gegenstand ist nicht mehr zu erkennen

## Patentansprüche

1. Orientierte, insbesondere biaxial orientierte, siegelfähige, metallisierbare Mehrschichtfolie **dadurch gekennzeichnet, daß** sie wie folgt aufgebaut ist:
A B C B D
a) wobei C die Kernschicht, aus isotaktischem Polypropylen mit einem MFI zwischen 0.5 und 4.5 g/10 min ist
b) und A die Basisschicht für die Vakuumbedampfung aus 0.1-0.5 % eines organischen oder anorganischen Abstandshalter und 1 bis 10 % eines Ethylen/Octencopolymer mit einer Dichte < 0,915 g/cm³ und 89.5 bis 98.9 % eines heißsiegelbaren Propylen/Ethylencopolymer mit 1 bis 8% Ethylenanteil ist
c) und B die beiden Zwischenschichten aus einem Propylenhomopolymer mit einem MFI zwischen 2 und 12 g/10 min sind
d) und D die siegelfähige Schicht aus einem olefinischen Homo-, Co- oder Terpolymer und 0.1 bis 0.5 eines anorganischen oder organischen Abstandshalter oder einer Mischung der beiden Abstandshalterklassen ist.

2. Folie nach dem Anspruch 1, **dadurch gekennzeichnet, daß** sie auf der Schicht A flamm- oder plasma- oder coronavorbehandelt oder mittels Excimerlampen vorbehandelt ist.

3. Folie nach den Ansprüchen 1 und 2, **dadurch gekennzeichnet, daß** sie im Vakuum mit einem Element oder den Oxiden des Elementes der ersten bis vierten Haupt- oder Nebengruppe des Periodensystems der Elemente bedampft ist.

4. Verwendung der Folie nach den Ansprüchen 1 bis 3 als Solofolie oder Verbundfolienkomponente zu Verpackungzwecken.

## Claims

1. An oriented, particularly a biaxially oriented, sealable, metallisable multilayer film, **characterised in that** it is built up as follows:
A B C B D
a) where C is the core layer comprising isotactic polypropylene with an MFI between 0.5 and 4.5 g/10 min,
b) A is the base layer for vacuum evaporation, comprising 0.1-0.5 % of an organic or inorganic spacer and 1 to 10 % of an ethylene/octene copolymer with a density < 0.915 g/cm³, and 89.5 to 98.9 % of a heat-sealable propylene/ethylene copolymer with an ethylene content of 1 to 8 %,
c) B represents the two intermediate layers comprising a propylene homopolymer with an MFI between 2 and 12 g/10 min,
d) and D is the sealable layer comprising an olefinic homo-, co- or terpolymer and 0.1 to 0.5 % of an inorganic or organic spacer, or a mixture of the two classes of spacer.

2. A film according to claim 1, **characterised in that** on layer A it is flame- or plasma-pretreated, or corona discharge pretreated, or is pretreated by means of excimer lamps.

3. A film according to claims 1 and 2, **characterised in that** it is coated in a vacuum with an element, or with oxides of the element, of the first to fourth main group or subgroup of the periodic table of the elements.

4. The use of the film according to claims 1 to 3 as a single film or as a component of a composite film for packaging purposes.

## Revendications

1. Feuille multicouche métallisable, soudable, orientée, en particulier orientée biaxialement, **caractérisée en ce qu'**elle est constituée de manière suivante :
A B C B D
a) C est la couche d'âme en polypropylène isotactique ayant un MFI entre 0,5 et 4,5 g/10 min
b) et A est la couche de base pour la métallisation sous vide constituée par 0,1-0,5 % d'un élément d'écartement organique ou inorganique et 1 à 10 % d'un copolymère éthylène/octène d'une densité inférieure à 0,915 g/cm³ et 89,5 à 98,9 % d'un copolymère propylène/éthylène thermosoudable avec une proportion d'éthylène de 1 à 8 %
c) et B représente les deux couches intermédiaires en homopolymère de propylène ayant un MFI entre 2 et 12 g/10 min
d) et D est la couche soudable constituée par un homo-, co-ou terpolymère oléfinique et 0,1 à 0,5 d'un élément d'écartement inorganique ou organique ou d'un mélange des deux classes d'éléments d'écartement.

2. Feuille selon la revendication 1, **caractérisée en ce qu'**elle est prétraitée sur la couche A à la flamme ou au plasma ou par décharge corona ou prétraitée au moyen de lampes excimères.

3. Feuille selon les revendications 1 et 2, **caractérisée en ce qu'**elle est métallisée sous vide avec un élément ou les oxydes de l'élément des premier à quatrième groupes principaux ou sous-groupes des systèmes périodiques des éléments.

4. Utilisation de la feuille selon les revendications 1 à 3 comme feuille solo ou comme composant de feuilles composites à des fins d'emballage.
